# EUROPÄISCHE PATENTSCHRIFT

(11) **EP 0 883 762 B1**
(45) Veröffentlichungstag und Bekanntmachung des Hinweises auf die Patenterteilung: **31.05.2000**
(21) Anmeldenummer: 97906800.4
(22) Anmeldetag: 09.01.1997
(51) Int. Cl.: F16H 61/12, F16H 61/00

(54) **HYDRAULIKNOTSTEUERUNG FÜR EIN STUFENLOSES UMSCHLINGUNGSGETRIEBE MIT ERWEITERTEM HANDSCHALTVENTIL**
EMERGENCY HYDRAULIC CONTROL FOR CONTINUOUSLY VARIABLE TRANSMISSION WITH EXPANDED MANUALLY-OPERATED VALVE
SYSTEME DE COMMANDE HYDRAULIQUE D'URGENCE POUR TRANSMISSION A VARIATION CONTINUE AVEC SOUPAPE DE COMMANDE MANUELLE ELARGIE

(30) Priorität: 13.03.1996 DE 19609787
(43) Veröffentlichungstag der Anmeldung: 16.12.1998
(73) Patentinhaber: ROBERT BOSCH GMBH, 70442 Stuttgart (DE)
(72) Erfinder: SENGER, Karl-Heinz, D-74369 Loechgau (DE)
(86) Internationale Anmeldenummer: DE9700020
(87) Internationale Veröffentlichungsnummer: WO9734093

(56) Entgegenhaltungen:
- EP-A- 0 324 928
- EP-A- 0 435 563
- DE-A- 4 138 378
- US-A- 4 685 358

## Beschreibung

### Stand der Technik

Die Erfindung geht von einer Hydrauliknotsteuerung nach dem Oberbegriff des Hauptanspruchs aus.

In der nicht vorveröffentlichten DE 195 19 162.5 ist eine Hydrauliknotsteuerung für ein elektronisch gesteuertes, kontinuierlich Verstellbares Getriebe (continuously variable transmission, CVT) beschrieben. Das CVT-Getriebe, das vorzugsweise in Personenkraftwagen verwendet wird, weist eine Steuerung für den Notfahrbetrieb auf, die bei einem Ausfall oder Abschalten der elektrohydraulischen Ansteuerung für den Normalfahrbetrieb ein Spannen des Übertragungsmittels mit einfachen hydraulischen Mitteln sicherstellt. Diese Mittel gewähren zum einen ein Anfahren mit Beladung und an Steigungsstrecken ohne Durchrutschen des übertragungsmittels und ermöglichen zum anderen nach dem Anfahren eine Getriebeverstellung von einer hohen Anfahrübersetzung zu einer niedrigen Overdrive-Übersetzung, so daß ein überdrehen des Antriebsmotors oder zu großer Schlupf zwischen Antriebsrädern und Fahrbahn verhindert werden.

Bei der bekannten Hydrauliknotsteuerung wird durch Zuschalten eines Drosselventils, das die Funktion einer Meßblende hat, aus dem Pumpenförderstrom ein der Motordrehzahl proportionales Signal gewonnen, das für eine Übersetzungsverstellung zwischen "Low" und "Overdrive" verwendet wird. Dazu wird ein zusätzliches Magnetventil benötigt, das im Normalfahrbetrieb den Pumpenförderstrom nahezu ungedrosselt passieren läßt und im Notfahrbetrieb das Drosselventil zuschaltet. Außerdem ist die übersetzungsverstellung infolge des temperaturabängigen Pumpenfördervolumens ebenfalls temperaturabhängig.

Ferner ist u.a. aus der DE 42 34 103 eine Hydraulikschaltung bekannt, mit der das Verhältnis zwischen Primär- und Sekundäröldruck über einen bestimmten Übersetzungsbereich annähernd konstant gehalten wird. Mit Hilfe einer derartigen Hydraulikschaltung ist ein sicheres Anfahren an Steigungen nicht immer garantiert.

In der Schrift DE-A-41 38 378 wird eine elektro-hydraulische Steuervorrichtung für ein stufenlos regelbares Kegelscheiben-Umschlingungsgetriebe, insbesondere für Kraftfahrzeuge, beschrieben, bei dem bei Ausfall der Elektronik mit Hilfe eines Handschaltventils ein vorher festgelegter Steuerdruck erzeugt wird, bei dem sowohl das Fahren als auch das Anfahren des Fahrzeugs gewährleistet ist. Hierbei wird aber nur im Notfahrbetrieb eine einzige Position angesteuert, die zwei Betriebszuständen zugeordnet ist.

### Vorteile der Erfindung

Die Hydrauliknotsteuerung wird benötigt, um ein stufenlos übersetzendes Umschlingungsgetriebe ohne die Unterstützung einer im Normalfahrbetrieb aktiven elektrohydraulischen Ansteuerung in einem Notfahrbetrieb benutzen zu können. In der Hydrauliknotsteuerung mit den Merkmalen des Hauptanspruchs wird bei einem Ausfall der Ansteuerelektronik im Notfahrbetrieb u.a durch Ansteigen des Primäröldrucks die Getriebeübersetzung automatisch in Richtung "Overdrive" verstellt. Um die Getriebeübersetzung in Richtung "Low" ändern zu können, z.B. für eine Bergfahrt unter Höchstlast oder zum Anfahren, wird vom Fahrer manuell oder ggf. auch mit anderer Muskelkraft in die Steuerung eingegriffen. Das reguläre Handschaltventil, das über einen sog. Fahrstufenwahlhebel betätigt wird, bekommt eine zusätzliche Schaltstellung "D₁". Ein mit dem Handschaltventil angesteuertes Ventil veranlaßt die Hydraulikschaltung zum Absenken des Primäröldrucks und zum Anheben des Sekundäröldrucks, womit sich die Getriebeübersetzung in Richtung "Low" verstellt. Die Schaltstellung "D₁" entspricht der größten Übersetzung. Sie wird mit dem Fahrstufenwahlhebel fest eingestellt.

Das Konzept, den Fahrer zwischen zwei Stufen für die Vorwärtsfahrt wählen zu lassen, ist weitgehend unabhängig vom Prinzip zur Steuerung der übersetzungsverstellung außerhalb des "Low"-Bereichs.

Weitere Einzelheiten der Erfindung ergeben sich aus den Unteransprüchen und der Figurenbeschreibung.

### Zeichnungen

Ein Ausführungsbeispiel der Erfindung ist schematisch in Form eines Hydraulikschaltplanes dargestellt und in der nachfolgenden Figurenbeschreibung erläutert.

### Beschreibung des Ausführungsbeispieles

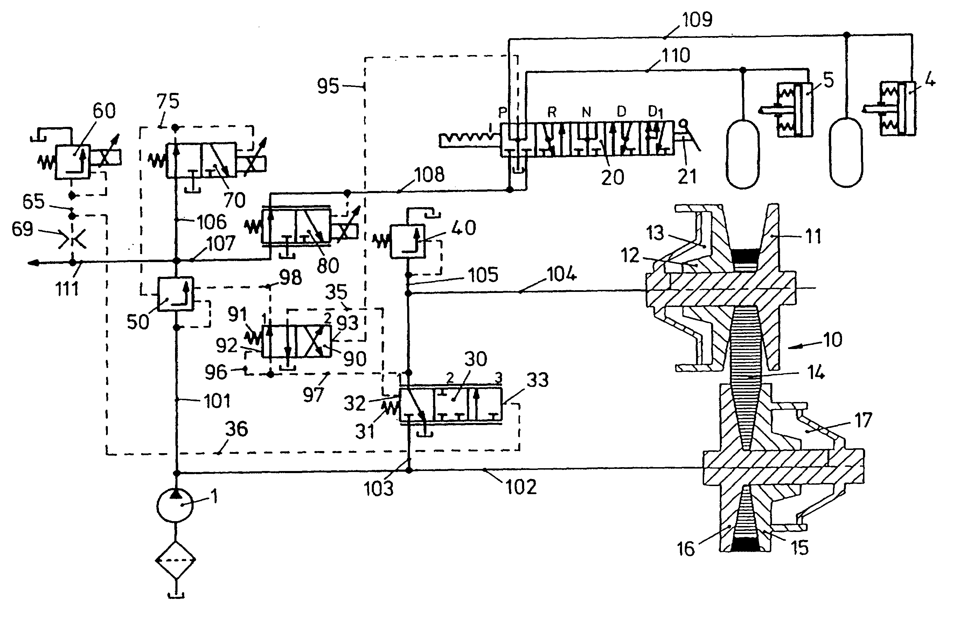

Figur 1 zeigt einen Hydraulikschaltplan zur Steuerung der Hydraüliköldrücke der an- und abtriebsseitigen Druckzylinder eines stufenlos übersetzenden Umschlingungsgetriebes. Das bekannte Umschlingungsgetriebe (10) umfaßt zwei Kegelscheibenpaare zwischen denen ein übertragungsmittel (14), beispielsweise ein Schubgliederband, eine Kette, ein Keilriemen oder dergleichen, angeordnet ist. Beide Kegelscheibenpaare bestehen jeweils aus zwei Kegelscheiben (11, 12; 15, 16), die hydraulisch gegeneinander verspannbar ausgebildet sind. Die dazu notwendigen Kolben- und Zylinderteile sind vorzugsweise zumindest . in einem Teil der Kegelscheiben integriert. Die von diesen Teilen eingeschlossenen Kolbenräume, auf der Primärseite der Kolbenraum (13) und auf der Sekundärseite der Kolbenraum (17), werden entsprechend der eingestellten Übersetzung mit dem jeweiligen Arbeitsdruck beaufschlagt.

In der hier beschriebenen Ausführung ist der erforderliche abtriebsseitige Sekundäröldruck größer oder gleich dem notwendigen antriebsseitigen Primäröldruck. Während des Normalfahrbetriebes, wenn das beispielsweise durch einen Handhebel (21) betätigbares 6/5-Wegeventil (20) in einer Schaltstellung "D" steht, werden die Kolbenräume (13) und (17) über eine beispielsweise vom Fahrzeugmotor angetriebene hydrostatische Pumpe (1) mit Hydrauliköl versorgt. Die Pumpe (1) fördert das Druckmittel über die Arbeitsleitungen (101) und (102) in den sekundärseitigen Kolbenraum (17).

Zwei Druckregelventile (60) und (70) stellen den für den jeweiligen Fahrzustand erforderlichen Sekundärdruck ein.

Das Druckregelventil (70) ist ein 3/2-Stetigwegeventil, das linksseitig eine Rückstellfeder und rechtsseitig neben einer hydraulischen Betätigung eine regelbare elektromagnetische Betätigung hat. An seinem Zuflußanschluß endet eine Arbeitsleitung (106). Die Arbeitsleitung (106) ist über ein Sekundärventil (50), ein hydraulisch ferngesteuertes Druckgefälleventil, mit der Arbeitsleitung (101) verbunden. Der Arbeitsanschluß des Ventils (70) ist zum einen mit dem rechtsseitigen hydraulischen Steueranschluß und zum anderen über eine Steuerleitung (75) mit dem linksseitigen Steueranschluß des Druckgefälleventils (50) verbunden. Damit wird bei dem Druckgefälleventil (50) der Ausgangsdruck um einen variablen, von der Zwischenstellung des Ventils (70) abhängigen Betrag gegenüber dem Eingangsdruck gesenkt.

Das Druckregelventil (60) ist ein Druckbegrenzungsventil mit einer regelbaren elektromagnetischen Betätigung. Es ist über eine Steuerleitung (65) und eine Arbeitsleitung (111) an der Arbeitsleitung (106) angeschlossen. In der Steuerleitung (65) sitzt ein Blendenventil (69).

Die Arbeitsleitung (111) führt zu weiteren, hier nicht dargestellten Baugruppen der Hydraulikschaltung.

Der Primäröldruck im Kolbenraum (13) wird mit Hilfe eines 3/3-Stetigwegeventils (30) eingestellt. Das Primärventil (30), das über eine Arbeitsleitung (103) aus der sekundären Arbeitsleitung (102) versorgt wird, ist über eine Arbeitsleitung (104) an der Kolbenkammer (13) angeschlossen. Aus der Arbeitsleitung (104) zweigt eine Arbeitsleitung (105) ab, die in einem Druckbegrenzungsventil (40) endet. Das Ventil (40) begrenzt den Primäröldruck.

Das Primärventil (30), ein 3/3-Stetigwegeventil mit zwei Durchflußstellungen und einer mittleren Sperrstellung, weist neben den beidseitigen hydraulischen Betätigungen mit den Steueranschlüssen (32) und (33) linksseitig eine Rückstellfeder (31) auf. Am Steueranschluß (33) endet eine Steuerleitung (36), die von der Steuerleitung (65) zwischen dem Blendenventil (69) und dem Druckbegrenzungsventil (60) abzweigt. Vom Steueranschluß (32) führt eine Steuerleitung (35) zu einem rechten Arbeitsanschluß eines Umschaltventils (90).

Das Umschaltventil (90) ist ein 4/2-Wegeventil mit einer Durchfluß- und einer Rückflußstellung. Eine linksseitig angeordnete Rückstellfeder (91) kann neben einer hydraulischen Betätigung mit einem Steueranschluß (92) das Ventil (90) in der Schaltstellung 1, der Durchflußstellung, halten. Rechtsseitig ist ebenfalls eine hydraulische Betätigung mit einem Steueranschluß (93) vorhanden. Der Zuflußanschluß des Umschaltventils (90) ist zum einen über eine Steuerleitung (97) mit der Arbeitsleitung (104) und zum anderen über eine Steuerleitung (96) mit dem Steueranschluß (92) der linksseitigen hydraulischen Betätigung verbunden. Eine Steuerleitung (98) verbindet einen rechten Steueranschluß des Druckgefälleventils (50) mit dem linken Arbeitsanschluß des Umschaltventils (90). Der Steueranschluß (93) führt zu dem mittleren Arbeitsanschluß des Handschaltventils (20).

Zu den Zuflußanschlüssen des Handschaltventils (20) führt eine Arbeitsleitung (108), die über ein Kupplungsventil (80) aus den Arbeitsleitungen (106) und (107) gespeist wird. Das Kupplungsventil (80) hat zumindest funktional den gleichen Aufbau wie das benachbart dargestellte Druckregelventil (70).

Das Handschaltventil (20) hat fünf Schaltstellungen. Die rechte Schaltstellung "P" und die mittlere Schaltstellung "N" haben die ähnliche Funktionen. Bei diesen Schaltstellungen werden die Zylinder (4) und (5) der Anfahrkupplungen für Vorwärts- und Rückwärtsfahrt über das Ventil beispielsweise in einen Tank entlastet. Dazu ist der Zylinder (4) über die Arbeitsleitung (109) an dem linken Arbeitsanschluß des Ventils (20) und der Zylinder (5) über die Arbeitsleitung (110) an dem rechten Arbeitsanschluß angeschlossen. Im Ventilschieber sind alle drei Arbeitsanschlüsse mit dem Rückflußanschluß verbunden. Die beiden Zuflußanschlüsse sind gesperrt.

Rechts neben der mittleren Schaltstellung liegt die Schaltstellung "D". Durch sie wird der rechte Zuflußanschluß gesperrt und der linke Zuflußanschluß mit dem linken Arbeitsanschluß verbunden. Somit kann über eine Arbeitsleitung (108) Druckmittel in die Arbeitsleitung (109) strömen, wodurch der Zylinder (4) und sein parallel geschalteter Druckspeicher mit Druck beaufschlagt werden. In dieser Schaltstellung ist der mittlere und der rechte Arbeitsanschluß mit dem Rückflußanschluß verbunden, womit zum einen der Zylinder (5) über die Arbeitsleitung (110) und zum anderen die Steuerleitung (95) entlastet wird.

Die rechte Schaltstellung "D₁" ist gegenüber der Schaltstellung "D" dadurch modifiziert, daß der linke Zuflußanschluß mit dem linken und dem mittleren Arbeitsanschluß verbunden ist, während der rechte Arbeitsanschluß direkt zum Rückflußanschluß führt.

In der links neben der Schaltstellung "N" liegenden Schaltstellung "R" wird aus der Arbeitsleitung (108) der Zylinder (5) mit Druck beaufschlagt, während der Zylinder (4) und die Steuerleitung (95) entlastet werden. Dazu ist der rechte Zuflußanschluß mit dem rechten Arbeitsanschluß und der linke zusammen mit dem mittleren Arbeitsanschluß mit dem Rückflußanschluß verbunden. Der linke Zuflußanschluß ist gesperrt.

Im Normalfahrbetrieb befindet sich das Handschaltventil (20) in der Schaltstellung "D". Die Steuerleitung (95) ist entlastet, womit das Umschaltventil (90) in Schaltstellung 1 verharrt. Die Steuerleitung (35) zwischen dem Primärventil (30) und dem Umschaltventil (90) ist zum Tank hin entlastet. Bei einem Ausfall der elektrohydraulischen Ansteuerung werden u.a. die elektromagnetischen Betätigungselemente der Druckventile (60) und (70) nicht mehr bestromt. Folglich steigt u.a. in den Steuerleitungen (65), (36) und (75) der Hydrauliköldruck auf seinen maximalen Wert an. Neben dem dadurch ansteigenden Sekundäröldruck erhöht sich auch der Primäröldruck, da sich das Primärventil (30) in seine Schaltstellung 3 bewegt. Da sich hierdurch auch der am Druckgefälleventil (50) über die Steuerleitungen (97) und (98) anliegende Fernsteuerdruck erhöht, sinkt der Sekundäröldruck auf ein mittleres Niveau. Die Getriebeübersetzungsverstellung verstellt sich in Richtung "Overdrive".

Zum Anfahren verstellt der Fahrer über den Handhebel (21) das Handschaltventil (20) in die Schaltstellung "D₁". Dadurch wird die zwischen dem Handschaltventil (20) und dem Umschaltventil (90) liegende Steuerleitung (95) aus der Arbeitsleitung (108) mit Hydrauliköl versorgt. Der somit am Steueranschluß (93) des Umschaltventils (90) anliegende Kupplungsdruck bewirkt dort ein Umschalten in die Schaltstellung 2. Über den Arbeitsanschluß des Umschaltventils (90) strömt Druckmittel unter Primäröldruck in die Steuerleitung (35). Das Primärventil (30) bewegt sich in Richtung der Schaltstellung 1, womit der Primäröldruck abfällt. Die Getriebeübersetzung "Low" stellt sich ein. Gleichzeitig wird die Steuerleitung (98) in den Tank entlastet, womit das Sekundärventil (50) nahezu schließt und der Sekundäröldruck auf sein maximales Niveau ansteigt, wodurch sich die Klemmkraft zwischen den Kegelscheiben (15) und (16) soweit erhöht, daß ein Durchrutschen des Übertragungsmittels beim Anfahren sicher verhindert wird.

Sollte ein Fahrer im Normalfahrbetrieb bei hoher Fahrgeschwindigkeit versehentlich die Schaltstellung "D₁" anwählen, käme dies einem abrupten Herunterschalten gleich. Derartige Schaltvorgänge bringen den Motor und das Getriebe an ihre Belastungsgrenzen. Zum Schutz von Motor und Umschlingungsgetriebe ist am Steueranschluß (92) des Umschaltventils (90) die Steuerleitung (96) angeschlossen. Letztere zweigt aus der Steuerleitung (97) ab, womit der hohe Primäröldruck das Umschaltventil (90) in der Schaltstellung 1 hält. Erst wenn der Primäröldruck bei nach und nach umschaltenden Ventil (90) um ein bestimmtes Maß gefallen ist, ändert das Getriebe seine Übersetzung.

Anstelle der mechanischen Federrückstellungen, die ggf. auch bezüglich der Federrate einstellbar sind, können bei den in Figur 1 dargestellten Ventilen teilweise auch hydraulische Betätigungen eingesetzt werden.

## Patentansprüche

1. Hydrauliknotsteuerung für eine übersetzungsabhängige Änderung der Hydrauliköldrücke in einer ersten und einer zweiten hydraulischen Kegelscheiben-Axialverstellung eines stufenlosen Umschlingungsgetriebes (10), mit mindestens jeweils einem mit Hilfe eines Handschaltventils (20) wählbaren Antriebszustand für mehrere Vorwärtsfahrteinstellungen (D, D₁), für Rückwärtsfahrt und für Leerlauf, dadurch gekennzeichnet, daß sie bei dem Antriebszustand für die Vorwärtsfahrt das Getriebe im Notfahrbetrieb in die "Overdrive"-Übersetzung steuert und daß im Notfahrbetrieb über eine Schaltstellung "D₁" für Vorwärtsfahrt die "Low-Übersetzung" einstellbar ist.

2. Hydrauliknotsteuerung gemäß Anspruch 1, bei der eine Pumpe (1) zumindest den Kolbenraum (17) einer zweiten Axialverstellung versorgt und ein nachgeschaltetes, ferngesteuertes Druckgefälleventil (50) und mindestens ein elektromagnetisch betätigtes Ventil (60) den dortigen Öldruck begrenzt und ferner aus dieser Versorgung über ein Stetig-Wegeventil (30), dessen Öffnungsbewegung in die Durchflußstellung mit Hilfe des vor dem Ventil (60) anstehenden Druckes gesteuert wird, den Kolbenraum (13) einer ersten Axialverstellung sowie eine zum Ventil (50) führende Fernsteuerung mit Öffnungsfunktion über die Fernsteuerleitung (97, 98) speist, wobei mindestens die einzelnen Antriebszustände wie Vorwärtsfahrt, Rückwärtsfahrt und Leerlauf über entsprechende Schaltstellungen des Handschaltventils (20) zur Ansteuerung von mindestens zwei über separate Arbeitsleitungen (109, 110) versorgte Kupplungen (4, 5) wählbar sind,
dadurch gekennzeichnet,
- daß die Schaltstellung "D₁" des Handschaltventils (20) bezüglich der Kupplungsansteuerung der Schaltstellung für Vorwärtsfahrt entspricht,
- daß das Handschaltventil (20) neben den Anschlüssen für die Arbeitsleitungen (109, 110) einen weiteren Arbeitsanschluß aufweist, der in den Schaltstellungen für Vorwärtsfahrt, Rückwärtsfahrt und Leerlauf mit dem Rückflußanschluß und in der Schaltstellung "D₁" mit dem Zuflußanschluß verbunden ist und
- daß der weitere Arbeitsanschluß über eine Steuerleitung (95) zu einem Steueranschluß (93) eines Umschaltventils (90) führt und das Umschaltventil (90) im Fall seiner Ansteuerung zum einen die Fernsteuerleitung (97, 98) sperrt und dabei den Leitungsteil (98) entlastet und zum anderen eine entlastete am Ventil (30) auf der Seite der Rückwärtsstellung angeschlossene Steuerleitung (35) mit Primäröldruck belastet.

3. Hydrauliknotsteuerung gemäß Anspruch 2, dadurch gekennzeichnet, daß das Handschaltventil (20) ein handhebelbetätigtes 6/5-Wegeventil mit zwei Zufluß- , einem Rücklauf- und drei Arbeitsanschlüssen ist, wobei die Schaltstellung für Leerlauf zweimal vorhanden ist.

4. Hydrauliknotsteuerung gemäß Anspruch 2, dadurch gekennzeichnet, daß der Zuflußanschluß des Handschaltventils (20) mit dem die Anfahrkupplungen (4, 5) speisenden Kupplungsdruck beaufschlagt ist.

5. Hydrauliknotsteuerung gemäß Anspruch 2, dadurch gekennzeichnet, daß das Umschaltventil (90) ein beidseits hydraulisch betätigtes 4/2-Stetigwegeventil mit einer Durchfluß- und einer Rückflußstellung ist, wobei auf der Seite der Durchflußstellung eine Rückstellfeder (91) angeordnet ist.

6. Hydrauliknotsteuerung gemäß Anspruch 2, dadurch gekennzeichnet, daß die Federkräfte der Rückstellfedern (31) und (91) einstellbar sind.

## Claims

1. Hydraulic emergency control for a transmissionratio-dependent change in the hydraulic oil pressures in a first and a second hydraulic cone-pulley-axial-adjustment device of a continuously variable belt-and-pulley transmission (10), having in each case at least one drive state, selectable by means of a manual control valve (20), for a plurality of forward-travel settings (D, D₁), for reverse travel and for idling, characterized in that, in the drive state for the forward travel, in emergency driving operation, it brings the transmission into overdrive transmission ratio, and in that, in emergency driving operation, the low transmission ratio can be set via a control position "D₁" for forward travel.

2. Hydraulic emergency control according to Claim 1, in which an oil pump (1) supplies at least the piston space (17) of a second axial-adjustment device, and a downstream, remote-controlled differential-pressure valve (50) and at least one electromagnetically actuated valve (60) limit the oil pressure there and furthermore, from this supply, via a continuous directional valve (30), whose opening movement into the throughflow position is controlled by means of the pressure applied upstream of the valve (60), feed the piston space (13) of a first axial-adjustment device, as well as a remote control leading to the valve (50) and having an opening function, via the remote-control line (97, 98), at least the individual drive states such as forward travel, reverse travel and idling being selectable via corresponding control positions of the manual control valve (20) for activating at least two couplings (4, 5) supplied via separate working lines (109, 110), characterized in that the control position "D₁" of the manual control valve (20), with regard to the coupling activation, corresponds to the control position for forward travel, in that the manual control valve (20), in addition to the connections for the working lines (109, 110), has a further working connection which is connected to the return-flow connection in the control positions for forward travel, reverse travel and idling and to the supply-flow connection in the control position "D₁", and in that the further working connection leads via a control line (95) to a control connection (93) of a reversing valve (90), and the reversing valve (90), in the event of its activation, on the one hand shuts off the remote-control line (97, 98) and relieves the line section (98) in the process and on the other hand loads a relieved control line (35) with primary oil pressure, the control line (35) being connected to the valve (30) on the side of the reverse position.

3. Hydraulic emergency control according to Claim 2, characterized in that the manual control valve (20) is a hand-lever-actuated 6/5-way directional valve having two supply-flow connections, one return connection and three working connections, the control position for idling being present twice.

4. Hydraulic emergency control according to Claim 2, characterized in that the coupling pressure feeding the starting couplings (4, 5) is applied to the supply-flow connection of the manual control valve (20).

5. Hydraulic emergency control according to Claim 2, characterized in that the reversing valve (90) is a 4/2-way continuous directional valve actuated hydraulically on both sides and having a throughflow position and a return-flow position, a restoring spring (91) being arranged on the side of the throughflow position.

6. Hydraulic emergency control according to Claim 2, characterized in that the spring forces of the restoring springs (31) and (91) are adjustable.

## Revendications

1. Commande hydraulique de secours pour une variation des pressions d'huile hydraulique en fonction de la démultiplication dans un premier et un deuxième déplacement axial hydraulique de disques coniques d'une transmission continue à enroulement (10) avec au moins respectivement une position d'entraînement pouvant être sélectionnée à l'aide d'une vanne de commande à main (20) pour plusieurs réglages de marche avant (D, DI), pour la marche arrière et pour le ralenti,
caractérisée en ce que
• dans la position d'entraînement en marche avant, en fonctionnement de secours, la commande hydraulique de secours fait passer la démultiplication de la transmission (10) en "surmultipliée", et
• on peut pour la marche avant faire passer la démultiplication sur le régime "lent" en fonctionnement de secours au moyen d'une position de commande "Dl".

2. Commande hydraulique de secours selon la revendication 1,
dans laquelle
une pompe (1) alimente au moins la chambre de piston (17) d'un deuxième déplacement axial et un régulateur différentiel de pression (50), monté en aval, commandé à distance, et au moins Une vanne (60), actionnée de façon électromagnétique, limitent la pression d'huile à cet endroit et en outre à partir de cette alimentation par l'intermédiaire d'un distributeur continu (30), dont le mouvement d'ouverture est commandé dans la position de passage de l'écoulement à l'aide de la pression qui s'applique en avant de la vanne (60), alimentent par l'intermédiaire de la conduite de commande à distance (97, 98) la chambre de piston (13) d'un premier déplacement axial ainsi qu'une commande à distance allant à la vanne (50) servant à l'ouverture, en pouvant sélectionner au moins les différentes positions d'entraînement telles que la marche avant, la marche arrière, et la marche au ralenti au moyen de positions de commande correspondantes de la vanne de commande à main (20) pour commander au moins deux embrayages (4, 5) alimentés au moyen de conduites de travail séparées (109, 110),
caractérisée en ce que
• la position de commande "D1" de la vanne de commande à main (20) correspond en ce qui concerne la commande d'embrayage à la position de commande pour la marche avant,
• la vanne de commande à main (20) présente en plus des raccords pour les conduites de travail (109, 110) un autre raccord de travail, qui est relié dans les positions de commande pour la marche avant, pour la marche arrière et pour le ralenti au raccord du retour de l'écoulement et dans la position de commande "D1" au raccord d'arrivée de l'écoulement, et
• l'autre raccord de travail va par l'intermédiaire d'une conduite de commande (95) à un raccord de commande (93) d'une vanne d'inversion (90) et la vanne d'inversion (90) si elle est commandée obture d'une part la conduite de commande à distance (97, 98) et ce faisant décharge la partie (98) de la conduite et d'autre part charge avec la pression d'huile primaire une conduite de commande (35) déchargée sur la vanne (30) raccordée au côté de la position de rappel.

3. Commande hydraulique de secours selon la revendication 2,
caractérisée en ce que
la vanne de commande à main (20) est un distributeur à 6/5 voies, actionnée par un levier à main, avec deux raccords d'arrivée, un raccord de retour, et trois raccords de travail, la position de commande pour le ralenti existant deux fois.

4. Commande hydraulique de secours selon la revendication 2,
caractérisée en ce que
le raccord d'arrivée de la vanne de commande à main (20) est alimenté par la pression d'embrayage qui alimente les embrayages de démarrage (4, 5).

5. Commande hydraulique de secours selon la revendication 2,
caractérisée en ce que
la vanne d'inversion (90) est un distributeur continu à 4/2 voies actionné hydrauliquement des deux côtés, avec une position de passage de l'écoulement et une position de retour de l'écoulement, un ressort de rappel (91) étant disposé du côté de la position de passage de l'écoulement.

6. Commande hydraulique de secours selon la revendication 2,
caractérisée en ce qu'
on peut régler les forces des ressorts de rappel (31) et (91).
